# EUROPEAN PATENT SPECIFICATION

(11) **EP 3 158 505 B1**
(45) Date of publication and mention of the grant of the patent: **07.06.2023**
(21) Application number: 15809764.2
(22) Date of filing: 07.06.2015
(51) Int. Cl.: G06V 10/94, G06V 30/24, G06Q 10/08

(54) **A METHOD AND A SYSTEM FOR OBJECT RECOGNITION**
VERFAHREN UND SYSTEM ZUR OBJEKTERKENNUNG
PROCÉDÉ ET SYSTÈME DE RECONNAISSANCE D'OBJET

(30) Priority: 18.06.2014 IL 23320814
(43) Date of publication of application: 26.04.2017
(73) Proprietor: Trax Technology Solutions Pte Ltd., Singapore 089842 (SG)
(72) Inventor: COHEN, Daniel Shimon, 4373015 Ra'anana (IL); ADATO, Yair, 9068000 Tomer (IL); POMERANZ, Dolev, 4440308 Kfar Saba (IL)
(74) Representative: Finnegan Europe LLP
(86) International application number: PCT/IL2015/050576
(87) International publication number: WO 2015/193877

(56) References cited:
- US-A1- 2006 240 862
- US-A1- 2009 185 784
- US-A1- 2010 217 678
- US-A1- 2011 115 917
- US-A1- 2011 128 150
- US-A1- 2011 173 100
- US-A1- 2012 051 652
- US-A1- 2012 243 739
- US-A1- 2014 009 382

## Description

### TECHNOLOGICAL FIELD

The present disclosure relates generally to the field of image processing. More particularly, the present disclosure relates to a method and system of image processing useful for improving object recognition in a retail environment.

### BACKGROUND

Object recognition relates to the task of identifying objects in an image or video sequence with a computer system. Generally, the computer system stores a set of one or more template images corresponding to a set of known products and analyzes an input image to check whether the known products can be detected in the input image.

Object recognition in a retail environment presents specific challenges. Particularly, objects in a retail environment have high variability because products' appearance attributes (e.g. size, color, amount of products in a package) are often modified by manufacturers in order to fit various requirements, such as special discounts for holidays, or for targeted customers. Furthermore, new products are regularly introduced in the market.

This increases difficulty for current object recognition systems.

US 2011/128150 A1 relates to detection of an unusual act and the identification of a subject of the unusual act using images from same camera.

### GENERAL DESCRIPTION

In the present application, the following terms and their derivatives may be understood in light of the below explanations:

### Imaging device

An imaging device may be an apparatus capable of acquiring pictures of a scene. In the following, the imaging device may comprise an image sensor, memory, a display communicatively coupled to the memory and a processing unit communicatively coupled to the memory, display and image sensor wherein the memory includes instructions for causing the processing unit to perform an image processing method. It should be understood that the term imaging device encompasses different types of cameras such as standard digital cameras, electronic handheld devices including imaging sensors, etc. Furthermore, in the following, it is understood that the images processed are images acquired in a retail store of a retail unit such as a shelving unit displaying retail items.

### Template image

The term "template image" may refer to an image representing an item (product), the image being acquired in standard conditions i.e. the acquisition parameters (i.e. lighting, resolution, etc.) being set to predetermined values. The template images may be used for building a recognition process which enables distinguishing a given item among a set of predetermined items. In order to do so, the template images are preferably high resolution images, typically of about 4 megapixels. Furthermore, template images can be composed of a plurality of lower resolution template images. In certain embodiments, a template image exclusively represents the object i.e. no other objects are contained in the template image. In certain embodiments, a ratio between an actual size of the object and a pixel size of the imaged object is associated to the template image i.e. a template image is also characterized by a level of magnification. This may enable to link a size of a patch, extracted from a template image, with an absolute size.

### Item signature

The term item signature may refer to a series of one or more patches distinguishing a template image of a given item from a set of template images associated with a predetermined set of items. The item signature (also referred to as "visual signature") of a given item may be built from the template image associated with the given item, taking into account the template images associated with the other items in the set of related items. A visual signature may comprise one or more patches hierarchically ordered with a spatial model. A visual signature may comprise a series of detectors, wherein each detector enables to detect a corresponding patch of the series of patches and the spatial model. The spatial model may define a relative positioning of at least some of the patches (and preferably each patch). For a given patch, the relative positioning may be expressed either with respect to a higher level patch or with respect to the primary patch. At least some of the patches (and preferably each patch) of the visual signature may also be associated with a property or discriminative condition. The visual signature forms a part model of an item which enables distinguishing the item from a set of related items (e.g. items belonging to the same class). The visual signature of an object is built while taking into account the other items of the set of related items.

In accordance with the invention, there is provided: a method of image processing, as recited by claim 1, a server, as recited by claim 8 and a system in accordance with claim 9. The invention is set out in the appended set of claims.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** illustrates schematically an imaging device according to embodiments of the present disclosure.
**Fig. 2** illustrates functional elements collaborating according to embodiments of the present disclosure.
**Fig. 3** illustrates steps of an image processing method according to embodiments of the present disclosure.

### DETAILED DESCRIPTION OF EMBODIMENTS

Described herein are some examples of systems and methods useful for item recognition.

In the following description, numerous specific details are set forth in order to provide a thorough understanding of the subject matter. However, it will be understood by those skilled in the art that some examples of the subject matter may be practiced without these specific details. In other instances, well-known methods, procedures and components have not been described in detail so as not to obscure the description.

As used herein, the phrase "for example," "such as", "for instance" and variants thereof describe non-limiting examples of the subject matter.

Reference in the specification to "one example", "some examples", "another example", "other examples, "one instance", "some instances", "another instance", "other instances", "one case", "some cases", "another case", "other cases" or variants thereof means that a particular described feature, structure or characteristic is included in at least one example of the subject matter, but the appearance of the same term does not necessarily refer to the same example.

It should be appreciated that certain features, structures and/or characteristics disclosed herein, which are, for clarity, described in the context of separate examples, may also be provided in combination in a single example. Conversely, various features, structures and/or characteristics disclosed herein, which are, for brevity, described in the context of a single example, may also be provided separately or in any suitable subcombination.

Unless specifically stated otherwise, as apparent from the following discussions, it is appreciated that throughout the specification discussions utilizing terms such as "generating", "determining", "providing", "receiving", "using", "transmitting", "communicating", "performing", "forming", "analyzing" or the like, may refer to the action(s) and/or process(es) of any combination of software, hardware and/or firmware. For example, these terms may refer in some cases to the action(s) and/or process(es) of a programmable machine, that manipulates and/or transforms data represented as physical, such as electronic quantities, within the programmable machine's registers and/or memories into other data similarly represented as physical quantities within the programmable machine's memories, registers and/or other such information storage, transmission and/or display element(s).

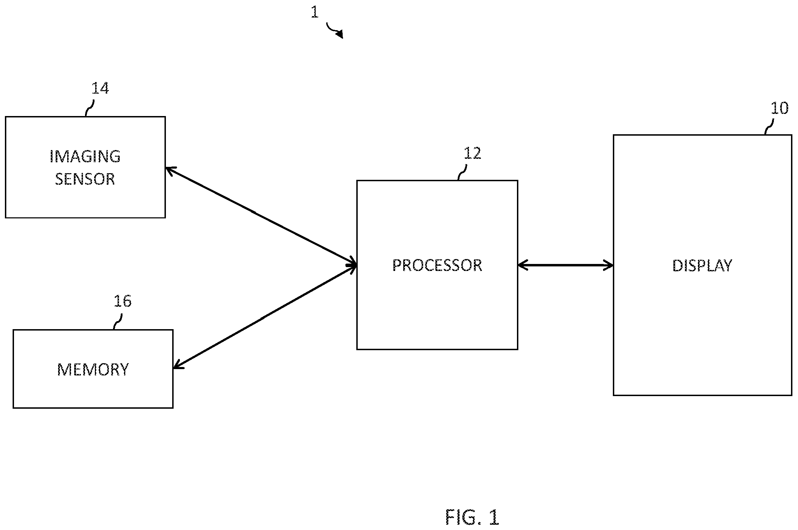

**Fig. 1** illustrates a simplified functional block diagram of an imaging device **1** according to embodiments of the present disclosure. The device **1** may be a handheld electronic device and may include a display **10,** a processor **12,** an imaging sensor **14** and memory **16.** The processor **12** may be any suitable programmable control device and may control the operation of many functions, such as the generation and/or processing of an image, as well as other functions performed by the electronic device. The processor **12** may drive the display (display screen) **10** and may receive user inputs from a user interface. The display screen **10** may be a touch screen capable of receiving user inputs. The memory **16** may store software for implementing various functions of the electronic device including software for implementing the image processing method according to the present disclosure. The memory **16** may also store media such as images and video files. The memory **16** may include one or more storage mediums tangibly recording image data and program instructions, including for example a hard-drive, permanent memory and semi permanent memory or cache memory. Program instructions may comprise a software implementation encoded in any desired language. The imaging sensor **14** may be a camera with a predetermined field of view. The camera may either be used in video mode, in which a stream of images is acquired upon command of the user, or in photographic mode, in which a single image is acquired upon command of the user.

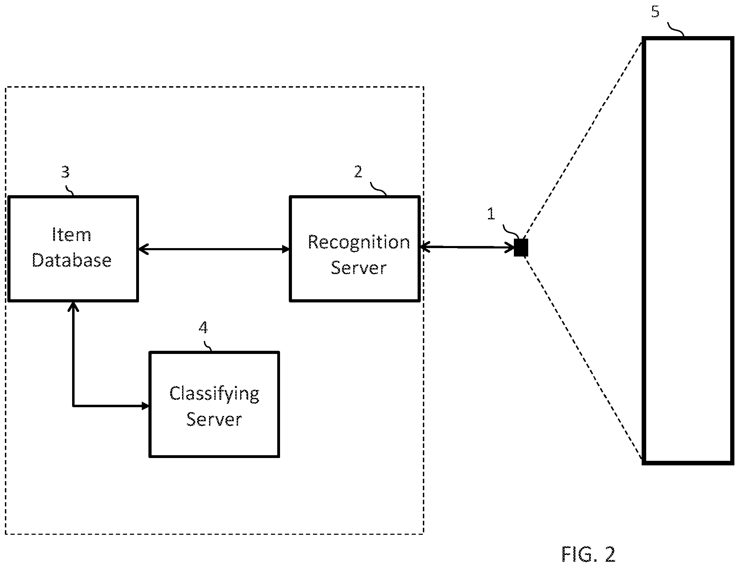

**Fig. 2** illustrates generally a high level functional diagram of elements capable of implementing embodiments of the method described in the present disclosure. More particularly, **Fig. 2** shows an imaging device **1** imaging a retail unit **5** and communicating with a recognition server **2.** The retail unit **5** may be configured to display retail items. The retail unit **5** may be for example a shelving unit and the retail items may be of any kind, for example bottles, cans, boxes, etc. Preferably, the retail items may be rigid objects. The imaging device **1** is configured to create a low resolution version and a high resolution version of the retail image. The retail image may be representative of a flank of the shelving unit and may contain images of one or more of the retail items. The low resolution version and the high resolution version of the retail image may result from compressing an image acquired by the imaging device 1. For example, the compression type may be a JPEG compression. The high resolution version of the retail image may be configured to be a temporary file which is erased automatically after a predetermined time period has elapsed from the creation of said high resolution version. Typically, the predetermined time period may be of less than an hour, for example between 1 and 10 minutes, or between 1 and 3 minutes, or in another example, 5 minutes. Further, the imaging device **1** is configured to communicate with the recognition server **2.** The imaging device **1** is configured to transmit the low resolution version of the retail image to the recognition server **2** using a communication data link, for example a wireless communication data link such as a 3G or a Wifi connection. The imaging device **1** is configured to transmit at least a part of the high resolution version of the retail image to the recognition server **2** (and/or to a classifying server **4** as described below) if, before the predetermined time period has elapsed, a request from the recognition server **2** is received by the imaging device **1.** The request includes data representative of a contour of an unidentified item in the low resolution version of the retail image. The imaging device **1** is configured for cropping the high resolution version of the retail image according to said data in order to restrict the transmission to a region of interest in the high resolution version of the retail image, said region of interest corresponding to the unidentified item area (item area) within said high resolution version of the retail image. The cropping of the high resolution version of the retail image may thereby provide a high resolution item image (or high resolution clip).

The recognition server **2** is configured to have access to an item database **3** which may store visual signatures of a set of predetermined items. The item database **3** also stores a set of high level identifiers configured to distinguish expected trademarks (brands, logos, labels, designs, etc.). This further enables the recognition server **2** to recognize said expected trademarks on items which do not belong to the predetermined set of items associated with the set of stored visual signatures. The visual signatures may form a classifier of the predetermined items and may be created based on a set of template images associated with the set of items. The server **2** is capable of accessing the item database **3** for using the visual signatures so as to run a recognition process on the transmitted low resolution version of the retail image. The item database 3 stores the visual signatures associated with the set of predetermined items and may also store the template images associated with said items. In some embodiments, a low resolution template image (or a basic item image, as explained in more details below) may be stored and the item database may include a low resolution visual signature defined based on said low resolution template image.

It is noted that the item database **3** and the recognition server **2** may in certain embodiments be implemented on a single hardware or by a single software module. A classifying server **4** may carry out a method of defining one or more visual signatures associated with one or more products belonging to the predetermined set of products (a classifier). The classifying server **4** and the recognition server **2** may also be implemented on a single hardware or by a single software module. The recognition server **2** may carry out a method of object recognition on the images acquired by the imaging device **1** based on the visual signatures defined by the classifying server **4** and store on the item database **3.** The recognition server **2** may therefore be configured to retrieve the defined visual signatures from the item database **3,** as illustrated by the arrow showing communication between the recognition server **2** and the item database **3.** The recognition server **2** may further be configured to receive at least one image derived from the imaging device **1,** as illustrated by the arrow showing communication between the recognition server **2** and the imaging device **1.**

The recognition server **2** may be configured to recognize any number of items related to the pre-defined visual signatures on the transmitted low resolution version of the retail image. Moreover, any number of instances of the same item could be detected in said version. The recognition server 2 may basically search if any of the one or more visual signatures can be detected in the captured image. In some embodiments, the recognition process may be executed in parallel using several computational units. Further, any search for inferior level patches could be parallelized and each top level patch and corresponding inferior level patches could be searched in parallel.

The classifying server **4** may be configured to define one or more visual signatures given in input of a set of template images associated with a predetermined set of items. As defined above, each visual signature may include a series of parts associated with their corresponding detectors and a spatial model. Preferably, after the visual signatures are defined, each detector of the visual signatures should be trained by applying techniques from the field of machine vision. The method of defining the visual signatures may be performed offline i.e. preliminarily to the image(s) acquisition or to the image(s) transmission. As described hereinafter, the method of defining one or more visual signatures is an iterative process (or alternatively, a recursive process). It may lead for each one of the products to a series of patches hierarchically ordered. Each patch from this series of patches may be associated with a detector configured for detecting the patch. The algorithm used in each detector may be adjusted according to the patch to be detected. Furthermore, each patch is associated with a relative position with respect to a higher patch in the series. The series of patches may also be associated with a spatial model defining a relative positioning of the patches. It is noted that generally, the relative position of an inferior level patch can be given with respect to any higher level patch. Preferably, the relative position is given with respect to the directly higher level patch or with respect to the top level patch. The visual signature associated with a product may be specific to this product and enable to distinguish the product among the set of predetermined products that may share similar appearance (i.e. related products).

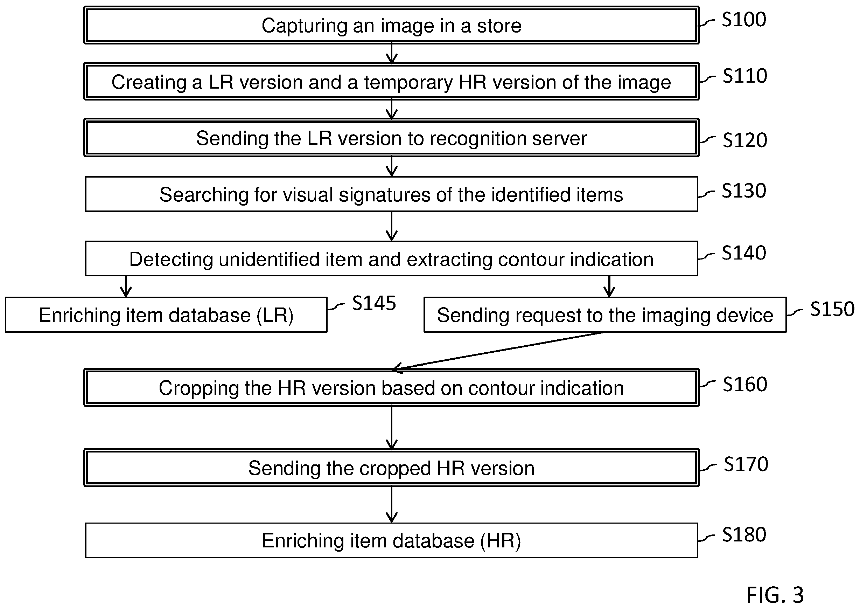

As explained in more detail below with reference to **Fig. 3****,** the present disclosure notably proposes a way of enriching the item database **3** when an unidentified item is detected in an image. Generally, a low resolution version of a retail image is sufficient for identifying accurately the items contained in said images using the recognition process based on the visual signatures. However, definition of the visual signatures is improved when performed on high resolution images. Therefore, the present disclosure proposes an automatic method which enables updating the visual signatures of the item database **3** while limiting the amount of data to be communicated by and stored on the imaging device **1.** It is understood that since a visual signature enables to distinguish an item among a set of predetermined items, enriching the set of predetermined items with one or more additional items may modify the definition of the visual signature and therefore require the visual signature to be updated taking into account said additional item.

**Fig. 3** is a flow chart illustrating steps of a method according to embodiments of the present disclosure. The method described below may be implemented by an imaging device collaborating with a remote server as previously described. The server may include a recognition server, a classifying server and an item database. The recognition server may perform an online (real-time) recognition process and the classifying server may perform an offline classifying process. In **Fig. 3****,** steps which are performed on the server side are represented by simple blocks while steps which are performed at the imaging device side are represented by blocks surrounded by a double border.

In step **S100,** a retail image is captured using the imaging device. For example, the retail image may be acquired in a store, in front of a shelving unit displaying retail items such as soda bottles.

In step **S110,** a low resolution version and a high resolution version of the retail image are created by the imaging device. The high resolution version of the retail image may be created as a temporary image which is erased automatically after a predetermined time period has elapsed from its creation. In some embodiments, the low resolution version may weigh no more than 500kb. In some embodiments, the high resolution version may weigh no more than 4Mb. In some embodiments, the high resolution version may in fact be the retail image as acquired by the imaging device and an automatic deletion by the device may be programmed.

In a further step **S120,** the low resolution version of the retail image is transmitted to the recognition server.

In a further step **S130,** the recognition server carries out a recognition process on the low resolution version of the retail image. The recognition server may search if any of the one or more visual signatures stored on the item database can be detected in the captured image. There are several options for the recognition server to search for visual signatures in the images. In some embodiments, for each visual signature, the recognition server may search sequentially in the whole image for each patch of the visual signature. Thereafter, identification of a visual signature in the image may be decided based on the relative position of the detected patches by comparing with the relative positions of the inferior level patches in said visual signature. In some embodiments, for each visual signature, the recognition server may be configured to search, in the whole image, only the primary patch. Using the detector associated with said primary patch, one may derive scale and orientation indications to each candidate of product. Thereafter, for the subsequent patches, given these indications and the relative position indication associated with subsequent patches from the visual signature, the recognition server may be configured to search for inferior level patches in restricted regions of interest (ROI) of the low resolution version of the retail image.

In step **S140,** an unidentified item is detected. The unidentified item may include some recognizable features but may not exactly match any of the visual signatures stored on the item database. In some embodiments, the unidentified item may be detected by detecting a high level identifier and by the unidentified item not fully matching any of the stored visual signatures. In some embodiments, an unidentified item may be detected by a partial recognition of one or more patches of a visual signature. For example, high level identifiers may be additionally searched in the low resolution version of the retail image. The high level identifiers may be stored in the item database and may enable to recognize expected trademarks. This may enable to associate the unidentified item with a known trademark (high level identifier). Furthermore, a contour of the unidentified item may be roughly determined using a size and optionally an orientation of said one or more detected patches or high level identifier. In some embodiments, an unidentified item may be detected manually by a user reviewing the low resolution version of the retail image.A low resolution item image may also be gathered for training the recognition process.

As shown in step **S145,** the item database is enriched at this stage. A basic item image is defined based on the contour of the unidentified item in the low resolution version of the retail image. The basic item image includes a cropping of the low resolution version of the retail image including the unidentified item. For example, the contour indication may comprise a position and size information about the unidentified item in the low resolution version of the retail image. In some embodiments, the basic item image may be processed by the classifying server in order to define a visual signature corresponding to the unidentified item and/or the already existing visual signatures corresponding to the predetermined set of items may be updated using said low resolution (basic) item image. However, as explained above, a quality of the visual signature may be improved by retrieving a higher resolution image of the unidentified item.

Therefore, in step **S150,** a request is transmitted to the imaging device by the server. The request may cause the imaging device to transmit back to the server at least part of the high resolution version of the retail image, if the request is received before the predetermined time period expires. The request includes data indicative of the contour of the unidentified item in the low resolution version of the retail image.

In step **S160,** upon receipt of the request from the server, the high resolution version of the retail image is cropped based on the transmitted contour indication so as to isolate the unidentified item area from the high resolution version of the retail image, thereby defining a high resolution item image. The item area corresponds to the contour of the unidentified item and include the unidentified item.

In step **S170,** the high resolution (HR) item image is transmitted to the server (directly to the classifying server or through the recognition server). Following the HR item image being transmitted, the high resolution version of the retail image may be deleted.

In step **S180,** the item database is enriched using the HR item image. For example, the HR item image may be processed by the classifying server in order to define a visual signature corresponding to the unidentified item and/or the already existing visual signatures corresponding to the predetermined set of items may be updated. Furthermore, high level identifiers may be searched in the HR item image so as to associate the HR item image with a known high level identifier (brand/trademark for example). The basic item image is replaced by the HR item image in the item database.

## Claims

1. A method of image processing comprising:
obtaining (S100) by an imaging device (1) a low resolution version and a high resolution version of a retail image, wherein the retail image is an image acquired in a retail store of a retail unit, the high resolution version of the retail image being a temporary file to be erased automatically after a predetermined time period;
transmitting (S120) the low resolution version of the retail image to a server comprising an item database (3) associating identified items with visual signatures distinguishing said items;
carrying out (S130) a recognition process on the low resolution version of the retail image using a recognition server (2), by searching the low resolution version of the retail image for visual signatures associated with identified items by the item database (3);
detecting (S 140) an unidentified item in the low resolution version of the retail image with a visual signature which does not match any of the visual signatures associated with identified items by the item database (3);
cropping (S160) the low resolution version of the retail image by the server to form a basic item image around a contour of the unidentified item;
storing the basic item image in the item database (3); and
updating (S145) the visual signatures corresponding to identified items in the item database (3) by storing in the item database (3) the visual signature associated with the basic item image;
upon receipt of a request from the server, (S 150) the request including data representative of the contour of the unidentified item in the low resolution version of the retail image, cropping a high resolution item image from the high resolution version of the retail image (S 160), the high resolution item image corresponding to the contour of the unidentified item;
transmitting (S 170) the high resolution item image to the server; and
updating (S 180) the item database with the high resolution item image, wherein the basic item image is replaced by the high resolution item image in the item database after the high resolution item image is transmitted by the imaging device (1).

2. The method according to claim 1, wherein the data representative of the contour comprise a position and size of the unidentified item in the low resolution version of the retail image and/or in the high resolution version of the retail image.

3. The method according to any of claims 1 and 2, wherein the high resolution version of the retail image is an image as captured by the imaging device (1) or a compressed version of said image.

4. The method according to any of the preceding claims, comprising erasing the high resolution version of the retail image from the imaging device (1) after the high resolution item image has been transmitted.

5. The method according to any of the preceding claims, wherein when the request from the server is received by the imaging device (1) after the predetermined time period, the method further comprising displaying to the user an invitation to acquire another image of the unidentified item, wherein the invitation is based on the data representative of the contour of the unidentified item in the low resolution version of the retail image.

6. The method according to any of the preceding claims, wherein the unidentified item in the low resolution version of the retail image does not correspond to any of the identified items in the item database (3).

7. The method according to any of the preceding claims, wherein the unidentified item is detected by searching by the server for a high level identifier within the low resolution version of the retail image and further comprising associating the unidentified item with said high level identifier in the item database (3) if said high level identifier is recognized in the low resolution retail image, wherein the high level identifier is selected among a set of high level identifiers configured to distinguish a set of expected trademarks.

8. A server, comprising an item database (3) associating identified items with visual signatures distinguishing said identified items, configured to:
receive, from an imaging device, a low resolution version of a retail image, wherein the retail image is an image acquired in a retail store of a retail unit;
search the visual signatures in the low resolution version of the retail image;
carry out (S130) a recognition process on the low resolution version of the retail image, by searching the low resolution version of the retail image for visual signatures associated with identified items by the item database (3);
detect (S140) an unidentified item in the low resolution version of the retail image with a visual signature which does not match any of the visual signatures associated with identified items by the item database (3);
crop (S160) a low resolution version of the retail image to form a basic item image around a contour of the unidentified item;
store the basic item image in the item database (3); and
update (S145) the visual signatures corresponding to identified items in the item database (3) by storing in the item database (3) the visual signature associated with the basic item image;
transmit a request, to the imaging device (1), wherein the request includes data representative of a contour of an unidentified item in the low resolution version of the retail image;
receive, from the imagine device, the high resolution retail image for updating the item database (3); and
update (S180) the item database (3) with the high resolution retail image by replacing a basic item image in the item database (3) by the received high resolution item image.

9. A system comprising:
the server according to claim 8; and
a handheld imaging device comprising:
memory (16);
an image sensor (14);
a display (10) communicatively coupled to the memory; and
a processing unit (12) communicatively coupled to the memory, display and image sensor, wherein the memory includes instructions for causing the processing unit to:
obtain a low resolution version and a high resolution version of a retail image, wherein the retail image is an image acquired in a retail store of a retail unit, the high resolution version of the retail image being a temporary file to be erased automatically after a predetermined time period;
transmit (S 120) the low resolution version of the retail image to the server;
respond to a request from the server (S 150) including data representative of the contour of the unidentified item in the low resolution version of the retail image, by cropping (S 160) a high resolution item image from the high resolution version of the retail image, the high resolution item image corresponding to the contour of the unidentified item; and
transmit (S 170) the high resolution item image to the server.

## Patentansprüche

1. Verfahren zur Bildverarbeitung, umfassend:
Erhalten (S100) durch eine Abbildungsvorrichtung (1) einer Version mit niedriger Auflösung und einer Version mit hoher Auflösung eines Einzelhandelsbildes, wobei das Einzelhandelsbild ein Bild ist, das in einem Einzelhandelsgeschäft einer Einzelhandelseinheit aufgenommen wird, wobei die Version mit hoher Auflösung des Einzelhandelsbildes eine temporäre Datei ist, die automatisch nach einer vorbestimmten Zeitspanne zu löschen ist;
Übertragen (S120) der Version mit niedriger Auflösung des Einzelhandelsbildes an einen Server, der eine Artikeldatenbank (3) umfasst, die identifizierte Artikel visuellen Signaturen zuordnet, die die Artikel unterscheiden;
Durchführen (S130) eines Erkennungsprozesses an der Version mit niedriger Auflösung des Einzelhandelsbildes unter Verwendung eines Erkennungsservers (2), indem die Version mit niedriger Auflösung des Einzelhandelsbildes nach visuellen Signaturen durchsucht wird, die identifizierten Artikeln durch die Artikeldatenbank (3) zugeordnet sind;
Erfassen (S140) eines nicht identifizierten Artikels in der Version mit niedriger Auflösung des Einzelhandelsbildes mit einer visuellen Signatur, die mit keiner der visuellen Signaturen übereinstimmt, die identifizierten Artikeln durch die Artikeldatenbank (3) zugeordnet sind;
Croppen (S160) der Version mit niedriger Auflösung des Einzelhandelsbildes durch den Server, um ein Basisartikelbild um eine Kontur des nicht identifizierten Artikels herum zu bilden;
Speichern des Basisartikelbildes in der Artikeldatenbank (3); und
Aktualisieren (S145) der visuellen Signaturen, die identifizierten Artikeln in der Artikeldatenbank (3) entsprechen, durch Speichern in der Artikeldatenbank (3) der visuellen Signatur, die dem Basisartikelbild zugeordnet ist;
bei Empfang einer Anfrage vom Server (S 150), wobei die Anfrage Daten enthält, die die Kontur des nicht identifizierten Artikels in der Version mit niedriger Auflösung des Einzelhandelsbildes darstellen, Croppen eines Artikelbildes mit hoher Auflösung aus der Version mit hoher Auflösung des Einzelhandelsbildes (S160), wobei das Artikelbild mit hoher Auflösung der Kontur des nicht identifizierten Artikels entspricht;
Übertragen (S170) des Artikelbildes mit hoher Auflösung an den Server; und
Aktualisieren (S180) der Artikeldatenbank mit dem Artikelbild mit hoher Auflösung, wobei das Basisartikelbild durch das Artikelbild mit hoher Auflösung in der Artikeldatenbank ersetzt wird, nachdem das Artikelbild mit hoher Auflösung von der Abbildungsvorrichtung (1) übertragen wurde.

2. Verfahren nach Anspruch 1, wobei die Daten, die die Kontur darstellen, eine Position und Größe des nicht identifizierten Artikels in der Version mit niedriger Auflösung des Einzelhandelsbildes und/oder in der Version mit hoher Auflösung des Einzelhandelsbildes umfassen.

3. Verfahren nach einem der Ansprüche 1 und 2, wobei die Version mit hoher Auflösung des Einzelhandelsbildes ein Bild ist, wie es von der Abbildungsvorrichtung (1) aufgenommen wurde, oder eine komprimierte Version des Bildes.

4. Verfahren nach einem der vorhergehenden Ansprüche, umfassend Löschen der Version mit hoher Auflösung des Einzelhandelsbildes von der Abbildungsvorrichtung (1), nachdem das Artikelbild mit hoher Auflösung übertragen wurde.

5. Verfahren nach einem der vorhergehenden Ansprüche, wobei, wenn die Anfrage von dem Server nach der vorbestimmten Zeitspanne durch die Abbildungsvorrichtung (1) empfangen wird, das Verfahren ferner Anzeigen eines Aufrufs an den Benutzer umfasst, ein weiteres Bild des nicht identifizierten Artikels aufzunehmen, wobei der Aufruf auf den Daten basiert, die die Kontur des nicht identifizierten Artikels in der Version mit niedriger Auflösung des Einzelhandelsbildes darstellen.

6. Verfahren nach einem der vorhergehenden Ansprüche, wobei der nicht identifizierte Artikel in der Version mit niedriger Auflösung des Einzelhandelsbildes keinem der identifizierten Artikel in der Artikeldatenbank (3) entspricht.

7. Verfahren nach einem der vorhergehenden Ansprüche, wobei der nicht identifizierte Artikel erfasst wird, indem der Server nach einer Kennung hoher Ebene innerhalb der Version mit niedriger Auflösung des Einzelhandelsbildes sucht, und ferner Zuordnen des nicht identifizierten Artikels zu der Kennung hoher Ebene in der Artikeldatenbank (3) umfassend, wenn die Kennung hoher Ebene in dem Einzelhandelsbild mit niedriger Auflösung erkannt wird, wobei die Kennung hoher Ebene aus einem Satz von Kennungen hoher Ebene ausgewählt wird, der dazu konfiguriert ist, einen Satz von erwarteten Warenzeichen zu unterscheiden.

8. Server, umfassend eine Artikeldatenbank (3), die identifizierte Artikel visuellen Signaturen zuordnet, die die identifizierten Artikel unterscheiden, der konfiguriert ist zum:
Empfangen, von einer Abbildungsvorrichtung einer Version mit niedriger Auflösung eines Einzelhandelsbildes, wobei das Einzelhandelsbild ein Bild ist, das in einem Einzelhandelsgeschäft einer Einzelhandelseinheit aufgenommen wurde;
Suchen der visuellen Signaturen in der Version mit niedriger Auflösung des Einzelhandelsbildes;
Durchführen (S130) eines Erkennungsprozesses an der Version mit niedriger Auflösung des Einzelhandelsbildes, indem die Version mit niedriger Auflösung des Einzelhandelsbildes nach visuellen Signaturen durchsucht wird, die identifizierten Artikeln durch die Artikeldatenbank (3) zugeordnet sind;
Erfassen (S140) eines nicht identifizierten Artikels in der Version mit niedriger Auflösung des Einzelhandelsbildes mit einer visuellen Signatur, die mit keiner der visuellen Signaturen übereinstimmt, die identifizierten Artikeln durch die Artikeldatenbank (3) zugeordnet sind;
Croppen (S160) einer Version mit niedriger Auflösung des Einzelhandelsbildes, um ein Basisartikelbild um eine Kontur des nicht identifizierten Artikels herum zu bilden;
Speichern des Basisartikelbildes in der Artikeldatenbank (3); und
Aktualisieren (S145) der visuellen Signaturen, die identifizierten Artikeln in der Artikeldatenbank (3) entsprechen, durch Speichern in der Artikeldatenbank (3) der visuellen Signatur, die dem Basisartikelbild zugeordnet ist;
Übertragen einer Anfrage an die Abbildungsvorrichtung (1), wobei die Anfrage Daten enthält, die eine Kontur eines nicht identifizierten Artikels in der Version mit niedriger Auflösung des Einzelhandelsbildes darstellen;
Empfangen, von der Abbildungsvorrichtung, des Einzelhandelsbildes mit hoher Auflösung zum Aktualisieren der Artikeldatenbank (3); und
Aktualisieren (S180) der Artikeldatenbank (3) mit dem Einzelhandelsbild mit hoher Auflösung durch Ersetzen eines Basisartikelbildes in der Artikeldatenbank (3) durch das empfangene Artikelbild mit hoher Auflösung.

9. System, umfassend:
den Server nach Anspruch 8; und
eine tragbares Abbildungsvorrichtung, umfassend:
Speicher (16);
einen Bildsensor (14);
eine Anzeige (10), die kommunikativ mit dem Speicher gekoppelt ist; und
eine Verarbeitungseinheit (12), die kommunikativ mit dem Speicher, der Anzeige und dem Bildsensor gekoppelt ist, wobei der Speicher Anweisungen enthält, um die Verarbeitungseinheit zu veranlassen zum:
Erhalten einer Version mit niedriger Auflösung und einer Version mit hoher Auflösung eines Einzelhandelsbildes, wobei das Einzelhandelsbild ein Bild ist, das in einem Einzelhandelsgeschäft einer Einzelhandelseinheit aufgenommen wird, wobei die Version mit hoher Auflösung des Einzelhandelsbildes eine temporäre Datei ist, die automatisch nach einer vorbestimmten Zeitspanne zu löschen ist;
Übertragen (S 120) der Version mit niedriger Auflösung des Einzelhandelsbildes an den Server;
Reagieren auf eine Anfrage vom Server (S 150), die Daten enthält, die die Kontur des nicht identifizierten Artikels in der Version mit niedriger Auflösung des Einzelhandelsbildes darstellen, durch Croppen (S 160) eines Artikelbildes mit hoher Auflösung aus der Version mit hoher Auflösung des Einzelhandelsbildes, wobei das Artikelbild mit hoher Auflösung der Kontur des nicht identifizierten Artikels entspricht; und
Übertragen (S 170) des Artikelbildes mit hoher Auflösung an den Server.

## Revendications

1. Procédé de traitement d'images, comprenant :
l'obtention (S100) par un dispositif d'imagerie (1) d'une version à basse résolution et d'une version à haute résolution d'une image de détail, ladite image de détail étant une image acquise dans un magasin de détail d'une unité de détail, la version à haute résolution de l'image de détail étant un fichier temporaire à effacer automatiquement après une période de temps prédéfinie ;
la transmission (S120) de la version à basse résolution de l'image de détail à un serveur comprenant une base de données d'articles (3) associant des articles identifiés à des signatures visuelles distinguant lesdits articles ;
la réalisation (S 130) d'un processus de reconnaissance sur la version à basse résolution de l'image de détail à l'aide d'un serveur de reconnaissance (2), en recherchant dans la version à basse résolution de l'image de détail des signatures visuelles associées aux articles identifiés par la base de données d'articles (3) ;
la détection (S 140) d'un article non identifié dans la version à basse résolution de l'image de détail avec une signature visuelle qui ne correspond à aucune des signatures visuelles associées aux articles identifiés par la base de données d'articles (3) ;
le rognage (S 160) de la version à basse résolution de l'image de détail par le serveur pour former une image d'article de base autour d'un contour de l'article non identifié ; le stockage de l'image d'article de base dans la base de données d'articles (3) ; et
la mise à jour (S145) des signatures visuelles correspondant aux articles identifiés dans la base de données d'articles (3) en stockant dans la base de données d'articles (3) la signature visuelle associée à l'image d'article de base ;
lors de la réception d'une demande en provenance du serveur, (S150) la demande comprenant des données représentatives du contour de l'article non identifié dans la version à basse résolution de l'image de détail, le rognage d'une image d'article à haute résolution à partir de la version à haute résolution de l'image de détail (S 160), l'image d'article à haute résolution correspondant au contour de l'article non identifié ;
la transmission (S170) de l'image d'article haute résolution au serveur ; et la mise à jour (S180) de la base de données d'articles avec l'image d'article à haute résolution, ladite image d'article de base étant remplacée par l'image d'article à haute résolution dans la base de données d'articles après que l'image d'article à haute résolution a été transmise par le dispositif d'imagerie (1).

2. Procédé selon la revendication 1, lesdites données représentatives du contour comprenant une position et une taille de l'article non identifié dans la version à basse résolution de l'image de détail et/ou dans la version à haute résolution de l'image de détail.

3. Procédé selon l'une quelconque des revendications 1 et 2, ladite version à haute résolution de l'image de détail étant une image telle que capturée par le dispositif d'imagerie (1) ou une version compressée de ladite image.

4. Procédé selon l'une quelconque des revendications précédentes, comprenant l'effacement de la version à haute résolution de l'image de détail du dispositif d'imagerie (1) après que l'image d'article à haute résolution a été transmise.

5. Procédé selon l'une quelconque des revendications précédentes, lorsque la demande en provenance du serveur est reçue par le dispositif d'imagerie (1) après la période de temps prédéfinie, ledit procédé comprenant en outre l'affichage à l'utilisateur d'une invitation à acquérir une autre image de l'article non identifié, ladite invitation étant basée sur les données représentatives du contour de l'article non identifié dans la version à basse résolution de l'image de détail.

6. Procédé selon l'une quelconque des revendications précédentes, ledit article non identifié dans la version à basse résolution de l'image de détail ne correspondant à aucun des articles identifiés dans la base de données d'articles (3).

7. Procédé selon l'une quelconque des revendications précédentes, ledit article non identifié étant détecté en recherchant par le serveur un identifiant de haut niveau dans la version à basse résolution de l'image de détail et comprenant en outre l'association de l'article non identifié audit identifiant de haut niveau dans la base de données d'articles (3) si ledit identifiant de haut niveau est reconnu dans l'image de détail à basse résolution, ledit identifiant de haut niveau étant sélectionné parmi un ensemble d'identifiants de haut niveau configurés pour distinguer un ensemble de marques attendues.

8. Serveur, comprenant une base de données d'articles (3) associant des articles identifiés à des signatures visuelles distinguant lesdits articles identifiés, configuré pour :
recevoir, en provenance d'un dispositif d'imagerie, une version à basse résolution d'une image de détail, ladite image de détail étant une image acquise dans un magasin de détail d'une unité de détail ;
rechercher les signatures visuelles dans la version à basse résolution de l'image de détail ; réaliser (S 130) un processus de reconnaissance sur la version à basse résolution de l'image de détail, en recherchant dans la version à basse résolution de l'image de détail des signatures visuelles associées à des articles identifiés par la base de données d'articles (3) ;
détecter (S 140) un article non identifié dans la version à basse résolution de l'image de détail avec une signature visuelle qui ne correspond à aucune des signatures visuelles associées aux articles identifiés par la base de données d'articles (3) ;
rogner (S 160) une version à basse résolution de l'image de détail pour former une image d'article de base autour d'un contour de l'article non identifié ;
stocker l'image d'article de base dans la base de données d'articles (3) ; et
mettre à jour (S 145) les signatures visuelles correspondant aux articles identifiés dans la base de données d'articles (3) en stockant dans la base de données d'articles (3) la signature visuelle associée à l'image d'article de base ;
transmettre une demande au dispositif d'imagerie (1), ladite demande comprenant des données représentatives d'un contour d'un article non identifié dans la version à basse résolution de l'image de détail ;
recevoir, en provenance du dispositif d'imagerie, l'image de détail à haute résolution en vue de la mise à jour de la base de données d'articles (3) ; et
mettre à jour (S180) la base de données d'articles (3) avec l'image de détail à haute résolution en remplaçant une image d'article de base dans la base de données d'articles (3) par l'image d'article à haute résolution reçue.

9. Système comprenant :
le serveur selon la revendication 8 ; et
un dispositif d'imagerie portatif comprenant :
une mémoire (16) ; un capteur d'images (14) ;
un dispositif d'affichage (10) couplé en communication à la mémoire ; et
une unité de traitement (12) couplée en communication à la mémoire, au dispositif d'affichage et au capteur d'images, ladite mémoire comprenant des instructions pour amener l'unité de traitement à :
obtenir une version à basse résolution et une version à haute résolution d'une image de détail, ladite image de détail étant une image acquise dans un magasin de détail d'une unité de détail, la version à haute résolution de l'image de détail étant un fichier temporaire à effacer automatiquement après un période de temps prédéfinie ;
transmettre (S 120) la version à basse résolution de l'image de détail au serveur ;
répondre à une demande en provenance du serveur (S150) comprenant des données représentatives du contour de l'article non identifié dans la version à basse résolution de l'image de détail, en rognant (S 160) une image d'article à haute résolution de la version à haute résolution de l'image de détail, l'image de l'article à haute résolution correspondant au contour de l'article non identifié ; et
transmettre (S 170) l'image d'article à haute résolution au serveur.
